(19) Europäisches Patentamt
European Patent Office
Office européen des brevets

(11) EP 0 909 638 B1

(12) EUROPÄISCHE PATENTSCHRIFT

(45) Veröffentlichungstag und Bekanntmachung des Hinweises auf die Patenterteilung:
**16.07.2003 Patentblatt 2003/29**

(51) Int Cl.[7]: **C08L 23/10**, B32B 27/32, C08J 5/18

(21) Anmeldenummer: **98123677.1**

(22) Anmeldetag: **21.09.1994**

# (54) Biaxial orientierte Polypropylenfolie mit verbesserten Eigenschaften hinsichtlich Mechanik und Barriere

Biaxially oriented film of polypropylene with improved mechanical and barrier properties

Feuille de polypropylène orientée biaxialement ayant des propriétés de barrière et méchanique améliorées

(84) Benannte Vertragsstaaten:
**BE DE FR GB IT**

(30) Priorität: **27.09.1993 DE 4332835**
**02.11.1993 DE 4337250**

(43) Veröffentlichungstag der Anmeldung:
**21.04.1999 Patentblatt 1999/16**

(62) Dokumentnummer(n) der früheren Anmeldung(en) nach Art. 76 EPÜ:
**94114857.9 / 0 645 426**

(73) Patentinhaber: **Trespaphan GmbH**
**66539 Neunkirchen (DE)**

(72) Erfinder:
- **Peiffer, Herbert, Dr.**
**55126 Mainz (DE)**
- **Dries, Thomas, Dr.**
**55270 Schwabenheim (DE)**
- **Murschall, Ursula, Dr.**
**55283 Nierstein (DE)**
- **Schlögl, Gunter, Dr.**
**65779 Kelkheim (DE)**

(74) Vertreter: **Luderschmidt, Schüler & Partner GbR**
**Patentanwälte,**
**John-F.-Kennedy-Strasse 4**
**65189 Wiesbaden (DE)**

(56) Entgegenhaltungen:
**EP-A- 0 298 730** **EP-A- 0 497 160**
**US-A- 4 910 639**

EP 0 909 638 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft eine Polypropylenfolie mit verbesserten Barriereeigenschaften hinsichtlich Durchtritt von Wasserdampf und Sauerstoff und verbesserten mechanischen Eigenschaften.

Die Verbesserung der mechanischen Eigenschaften von Folien, insbesondere von Folien für den Verpackungssektor, hat in letzter Zeit an Bedeutung zugenommen. Aus Kosten- und aus Umweltgründen wünscht die Verpackungsindustrie immer dünnere Folien bei gleichbleibender Maschinengängigkeit und gleichbleibenden bzw. verbesserten Barriereeigenschaften, insbesondere hinsichtlich Durchtritt von Wasserdampf und Sauerstoff.

Dünnere Folien haben jedoch eine überproportional schlechtere Steifigkeit in Maschinenrichtung und damit ein wesentlich schlechteres Maschinenlaufverhalten, insbesondere auf den heutigen schnellaufenden Einschlagsmaschinen. Daneben verringern sich mit der Reduzierung der Foliendicke die Barriereeigenschaften ebenfalls überproportional. Infolge der schlechteren Barriereeigenschaften dünner Folien wird die Schutzwirkung der Folie gegenüber Verderben des Füllgutes stark eingeschränkt.

Die Steifigkeit (S) der Folie ist proportional dem Elastizitätsmodul (E) und der dritten Potenz der Dicke (d) [$S = E \cdot d^3$]. Daher hat man bei dünneren Folien nur die Möglichkeit, den Verlust an Steifigkeit über den Elastizitätsmodul der Folie zu kompensieren.

Die Erhöhung des Elastizitätsmoduls (E-Modul) in Maschinenrichtung ist seit jeher Gegenstand intensiver Bemühungen, weil diese mechanische Eigenschaft in unmittelbarem Zusammenhang mit der anwendungstechnischen Eignung steht und somit das Verarbeitungsverhalten direkt bestimmt.

Wie in den Produkt-Übersichten der Firmen Mobil Plastics Europe und Hoechst AG dargestellt liegt beispielsweise der Zug-E-Modul (DIN 53 457, ASTM 882) von üblichen boPP-Folien in Längsrichtung unabhängig von der Dicke zwischen 2 000 und 2 200 N/mm$^2$.

Die Barriere von boPP-Folien hinsichtlich Wasserdampf (WDD) und Sauerstoff (SDD) nimmt mit der Foliendicke ab. Im üblichen Dickenbereich von boPP-Folien (4 bis 100 $\mu$m) besteht z. B. zwischen der Wasserdampfbarriere (WDD) und der Dicke (d) näherungsweise ein hyperbolischer Zusammenhang ($WDD \cdot d = const.$). Die Konstante hängt im wesentlichen von der Rohstoffzusammensetzung und den Streckbedingungen ab. Für boPP-Verpackungsfolien nach dem Stand der Technik hat die Konstante einen Wert von etwa: const. = 28 g$\cdot\mu$m/m$^2\cdot$d. Die Wasserdampfdurchlässigkeit wurde hierbei nach DIN 53122 gemessen. Aus den genannten Produkt-Übersichten geht hervor, daß beispielsweise die Wasserdampfdurchlässigkeit einer 25 $\mu$m dicken boPP-Folie bei 1,1 g/m$^2\cdot$d liegt.

Es ist bekannt, bei boPP-Folien den E-Modul in Maschinenrichtung entweder über die Verfahrenstechnik oder über Rohstoffmodifikationen oder die Kombination beider Möglichkeiten zu erhöhen.

Eine Möglichkeit zur Herstellung von hochfesten Polypropylenfolien ist ein dreioder mehrstufiges Streckverfahren, wie es beispielsweise in der EP-B-0 116 457 beschrieben ist. Ein solches Herstellverfahren hat jedoch den Nachteil, daß es eine zusätzliche Vorrichtung zur Nachlängsstreckung benötigt und dadurch sehr aufwendig ist. Darüber hinaus ist es gegen Störungen im Produktionsablauf, z. B. Folienabrisse, sehr anfällig.

Ferner weisen solche nachlängsgestreckten Folien einen gegenüber lediglich biaxial verstreckten Folien deutlich erhöhten Längsschrumpf auf, der es in der Regel verhindert, daß die Folien eine thermische Trocknung, wie sie z. B. nach dem Aufbringen von Klebermassen zum Teil noch üblich ist, ohne unerwünschte Schrumpffalten überstehen.

Die Modifizierung der für die Herstellung von hochfesten Polypropylenfolien verwendeten Rohstoffe mit verschiedenen Kohlenwasserstoffharzen ist beispielsweise in der US-A-3,937,762 beschrieben. Eine solche Rohstoffmodifizierung ermöglicht die Herstellung von Polypropylenfolien, deren mechanische Festigkeit in Längsrichtung gegenüber Folien aus unmodifizierten Rohstoffen deutlich verbessert ist, die Werte nachlängsverstreckter Folien jedoch nicht erreicht, und deren Schrumpf in Längsrichtung ebenfalls relativ hoch ist.

In der EP-A-0 406 642 wird eine boPP-Folie mit hoher mechanischer Festigkeit beschrieben. Der hohe E-Modul in Längsrichtung wird dadurch erreicht, daß die Basisschicht 5 bis 30 Gew.-% eines Kohlenwasserstoffharzes und 0,01 bis 1,0 Gew.-% eines Nukleierungsmittels enthält. Über Barriereeigenschaften wird in dieser Schrift keine Ausage gemacht. In den Beispielen wird eine Harzkonzentration von 20 Gew.-% angegeben.

Derartig hohe Harzkonzentrationen führen zu Problemen bei der Folienherstellung. Insbesondere treten nach kurzer Zeit Ablagerungen an der Schnecke des Plastifizierextruders und an den Walzen der Längsstreckung auf. Daneben führt die Zugabe von Nukleierungsmittel in der angegebenen Konzentration zu optischen Foliendefekten in Form von sogenannten "Stippen" und "Blasen", die natürlich äußerst unerwünscht sind. Außerdem ist das Regenerat derartiger Folien aufgrund von Agglomeratneigung im Folienherstellprozeß nicht mehr einsetzbar. Weiterhin sind die in den Beispielen 3 bis 6 der EP-A-0 406 642 angegebenen Streckverhältnisse auf keiner Produktionsmaschine bei den üblichen Geschwindigkeiten mit dem dort beschriebenen Homopolymer zu realisieren. Es treten ständig Folienabrisse, insbesondere in der Querstreckung auf.

Hervorragende mechanische Eigenschaften lassen sich durch die Kombination eines Harzzusatzes zum eingesetzten Rohstoff mit einem Nachlängsstreckprozeß erzielen. Eine entsprechende Vorgehensweise ist in der EP-A-0 079 520 beschrieben; es werden Elastizitätsmodule in Längsrichtung von 4 000 bis 6 000 N/mm$^2$ erreicht. Allerdings

hat auch dieses Verfahren den Nachteil, daß ein aufwendiges und störanfälliges Nachlängsstreckverfahren erforderlich ist.

In der US-A-4,921,749 (= EP-A-0 247 898) wird eine siegelfähige boPP-Folie mit verbesserten mechanischen und optischen Eigenschaften beschrieben. Ebenfalls verbessert sind die Siegelbarkeit der Folie und die Durchlässigkeit für Wasserdampf und Sauerstoff. Sämtliche Verbesserungen resultieren aus der Zugabe eines niedrigmolekularen Harzes in die Basisschicht. Der Harzanteil beträgt dabei zwischen 3 und 30 Gew.-%. Das Harz hat ein Molekulargewicht deutlich kleiner als 5 000, bevorzugt kleiner als 1 000, und beträgt beispielsweise 600. Der Erweichungspunkt des Harzes liegt bei 120 bis 140 °C.

In der EP-A-0 468 333 wird eine siegelfähige Folie mit verbesserten Barriereeigenschaften hinsichtlich Durchtritt von Wasserdampf und Sauerstoff bei gleichzeitig guten Gleiteigenschaften und niedrigen Schrumpfwerten beschrieben. Die kennzeichnenden Merkmale dieser boPP-Folie sind darin zu sehen, daß sie aus einer Basisschicht aufgebaut ist, welche aus einem Polypropylen und einem Kohlenwasserstoffharz mit einem Erweichungspunkt von größer 140 °C besteht, und daß sie wenigstens eine siegelfähige Deckschicht aufweist, die gegebenenfalls zusätzlich ein Kohlenwasserstoffharz enthält. Die Basisschicht und die Deckschicht enthalten mindestens ein Antiblockmittel und/oder ein Gleitmittel.

In der US-A-4,921,749 und in der EP-A-0 468 333 werden hohe Konzentrationen an Kohlenwasserstoffharz eingesetzt, um die Barriereeigenschaften zu erhöhen. Derartig hohe Harzgehalte führen zu Problemen bei der Folienherstellung. Insbesondere treten nach kurzer Zeit Harzablagerungen an der Schnecke des Extruders und an den Längsstreckwalzen auf. Infolge der hohen Harzgehalte zeigen die Folien hohe Warmblockwerte und weisen eine störende Blockneigung bei der Weiterverarbeitung auf.

Die Aufgabe der vorliegenden Erfindung bestand darin, eine biaxial orientierte Polypropylenfolie zur Verfügung zu stellen, die sich durch einen hohen E-Modul in Maschinenrichtung und erhöhte Barriereeigenschaften hinsichtlich Durchtritt von Wasserdampf und Sauerstoff auszeichnet. Die Nachteile des Nachlängsstreckprozesses wie technische Umbauten an der Produktionsmaschine, Störungen durch häufige Folienabrisse und hoher Restschrumpf der boPP-Folien sollen vermieden werden. Weiterhin muß gewährleistet sein, daß das Regenerat in einer Konzentration von 20 bis 50 Gew.-%, bezogen auf das Gesamtgewicht der Folie, wieder zugeführt werden kann. Die Folie muß lauf- und verfahrenssicher bei Produktionsgeschwindigkeiten von bis zu 400 m/min herstellbar sein, ohne daß Harzablagerungen im Herstellprozeß auftreten. Andere physikalische Folieneigenschaften, die im Hinblick auf deren Verwendung als Verpackungsfolie und/oder als Kaschierfolie gefordert sind, dürfen nicht nachteilig beeinflußt werden. Die Folie soll einen hohen Glanz, keine optischen Defekte in Form von Stippen oder Blasen, eine gute Kratzfestigkeit, bei einer niedrigen Foliendicke einen störungsfreien Lauf auf schnellaufenden Verpackungsmaschinen und im Falle transparenter Folientypen eine niedrige Folientrübung aufweisen.

Diese Aufgabe wird durch eine biaxial orientierte Polypropylenfolie gelöst, deren kennzeichnende Merkmale darin bestehen, daß der n-heptanunlösliche Anteil der Folie einen Kettenisotaxie-Index, gemessen mittels $^{13}C$-NMR-Spektroskopie, von mindestens 95 %, vorzugsweise 95,5 bis 98%, aufweist, daß die Basisschicht im wesentlichen kein Harz enthält und daß der Elastizitätsmodul der Folie in Längsrichtung größer 2 500 N/mm$^2$ und der Elastizitätsmodul der Folie in Querrichtung größer 4 000 N/mm$^2$ ist und daß die Folie einschichtig ist und die Folie eine Dicke von < 20 μm aufweist.

Erfindungsgemäß ist die Folie einschichtig und besteht nur aus der im folgenden beschriebenen Basisschicht.

Die Basisschicht der Folie enthält im allgemeinen mindestens 85 Gew.-%, vorzugsweise 85 bis 100 Gew.-%, insbesondere 90 bis 100 Gew.-%, jeweils bezogen auf die Basisschicht, eines nachstehend beschriebenen Propylenhomopolymeren.

Dieses Propylenhomopolymer enthält mindestens 90 Gew.-%, vorzugsweise 94 bis 100 Gew.-%, insbesondere 98 bis 100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen. Die Angaben in Gew.-% beziehen sich jeweils auf das Propylenhomopolymere.

Das Propylenhomopolymere der Basisschicht hat einen Schmelzpunkt von 140 bis 165°C, vorzugsweise von 155 bis 162°C, und einen Schmelzflußindex (Messung DIN 53 735 bei 21,6 N Belastung und 230 °C) von 1,0 bis 10 g/10 min, vorzugsweise von 1,5 bis 6 g/10 min. Der n-heptanlösliche Anteil des Polymeren beträgt im allgemeinen 1 bis 10 Gew.-%, bezogen auf das Ausgangspolymere. Der n-heptanunlösliche Anteil des Propylenhomopolymeren ist hochisotaktisch. Der mittels $^{13}C$-NMR-Spektroskopie bestimmte Kettenisotaxie-Index des n-heptanunlöslichen Anteils beträgt mindestens 95 %, vorzugsweise 96 bis 99 %.

Die Molekulargewichtsverteilung des Propylenhomopolymeren kann je nach Anwendungsgebiet in breiten Grenzen variieren. Das Verhältnis des Gewichtsmittels $M_w$ zum Zahlenmittel $M_n$ liegt im allgemeinen zwischen 2 und 15, beispielsweise bei einem Wert >6, vorzugsweise 7-15.

In einer bevorzugten Ausführungsform der erfindungsgemäßen Folie liegt das Verhältnis des Gewichtsmittels $M_w$ zum Zahlenmittel $M_n$ bei einem Wert <6, vorzugsweise bei-2 bis 6, ganz besonders bevorzugt bei 3,5 bis 5. Eine derartig enge Molekulargewichtsverteilung des Propylenhomopolymeren der Basisschicht erreicht man beispielsweise

durch dessen peroxidischen Abbau.

Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1$ = Schmelzflußindex des Propylenpolymeren vor dem Zusatz des organischen Peroxids

$MFI_2$ = Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Darüber hinaus kann die Basisschicht zusätzlich übliche Additive wie Antiblockmittel, Neutralisationsmittel, Stabilisatoren, Antistatika, Gleitmittel und Pigmente in jeweils wirksamen Mengen enthalten. Sie enthält jedoch im wesentlichen kein Harz. Die Angabe "im wesentlichen" bedeutet, daß ein geringer Harzgehalt, welcher die Folieneigenschaften nicht beeinflußt, möglich ist, wobei dieser Gehalt im allgemeinen unter 1 Gew.-%, bezogen auf das Gesamtgewicht der Folie, liegt.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des weiteren wird Glycerinmonostearat in einer Menge von 0,03 % bis 0,5 % bevorzugt als Antistatikum eingesetzt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,8 Gew.-%. Die mittlere Teilchengröße liegt zwischen 1 und 6 μm, insbesondere 2 und 5 μm, wobei Teilchen mit einer kugelförmigen Gestalt, wie in der EP-A-0 236 945 und der DE-A-38 01 535 beschrieben, besonders geeignet sind.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht. Ein insbesondere geeignetes aliphatisches Säureamid ist Erucasäureamid.

Der Zusatz von Polydimethylsiloxanen ist im Bereich von 0,02 bis 2,0 Gew.-% bevorzugt, insbesondere Polydimethylsiloxane mit einer Viskosität von 5 000 bis 1 000 000 $mm^2/s$.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Dihydrotalcit, Calciumstearat und/oder Calciumcarbonat einer mittleren Teilchengröße von höchstens 0,7 μm, einer absoluten Teilchengröße von kleiner 10 μm und einer spezifischen Oberfläche von mindestens 40 $m^2/g$.

Pigmente umfassen solche Teilchen, die im wesentlichen nicht zur Vakuolenbildung beim Verstrecken führen. Die färbende Wirkung der Pigmente wird durch die Teilchen selbst verursacht. Der Begriff "Pigment" ist im allgemeinen an eine Teilchengröße von 0,01 bis maximal 1 μm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 μm, vorzugsweise 0,01 bis 0,5 μm.

Übliche Pigmente sind Materialien wie z. B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Calciumcarbonat, Siliciumdioxid und Titandioxid bevorzugt eingesetzt werden.

Die Basisschicht enthält Pigmente im allgemeinen in einer Menge von 1 bis 25 Gew.-%, insbesondere 2 bis 20 Gew.-%, bevorzugt 5 bis 15 Gew.-%, jeweils bezogen auf die Basisschicht. Als Pigmente sind Weißpigmente, insbesondere $TiO_2$, Siliciumdioxid und $BaSO_4$ bevorzugt. Diese Pigmente haben bevorzugt einen mittleren Teilchendurchmesser von 0,01 bis 0,7 µm, insbesondere 0,01 bis 0,4 µm.

Die Titandioxidteilchen bestehen zu mindestens 95 Gew.-% aus Rutil und werden bevorzugt mit einem Überzug aus anorganischen Oxiden eingesetzt, wie er üblicherweise als Überzug für $TiO_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. $TiO_2$-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den $TiO_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, jeweils bezogen auf 100 g $TiO_2$-Teilchen, enthalten. Als besonders vorteilhaft hat es sich erwiesen, wenn die $TiO_2$-Teilchen mit $Al_2O_3$ oder mit $Al_2O_3$ und Polydimethylsiloxan beschichtet sind.

Die Gesamtdicke der erfindungsgemäßen einschichtigen Polypropylenfolie beträgt weniger als 20 µm.

Die Erfindung betrifft weiterhin ein Verfahren zur Herstellung der erfindungsgemäßen Polypropylenfolie nach dem an sich bekannten Extrusionsverfahren.

Im Rahmen dieses Verfahrens wird so vorgegangen, daß die Schicht der Folie entsprechende Schmelze durch eine Flachdüse extrudiert wird, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist

Zunächst wird wie beim Extrusionsverfahren üblich das Polymere bzw. die Polymermischung der Schicht in einem Extruder komprimiert und verflüssigt, wobei die gegebenenfalls zugesetzten Additive bereits im Polymer bzw. in der Polymermischung enthalten sein können. Die Schmelze wird dann durch eine Flachdüse (Breitschlitzdüse) gepreßt, und die ausgepreßte Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstrekungsverhältnisse liegen im Bereich von 5,0 bis 9, vorzugsweise 5,5 bis 8,5. Die Querstreckverhältnisse liegen im Bereich von 5,0 bis 9,0.

Die Reißfestigkeit der PP-Folie beträgt in Längsrichtung >160N/$mm^2$, in Querrichtung >230N/$mm^2$, die Reißdehnung in Längsrichtung <140% und in Querrichtung >60%.

An die biaxiale Streckung der Folie schließt sich ihre Thermofixierung (Wärmebehandlung) an, wobei die Folie etwa 0,1 bis 10 lang bei einer Temperatur von 100 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie abgekühlt und verfestigt wird, durch einen Heiz- und Kühlkreislauf bei einer Temperatur von 10 bis 100 °C, vorzugsweise 20 bis 70 °C, zu hatten.

Die Temperaturen, bei denen Längs- und Querstreckung durchgeführt werden, können in einem relativ großen Bereich variieren und richten sich nach den gewünschten Eigenschaften der Folie. Im allgemeinen wird die Längsstrekung vorzugsweise bei 80 bis 150 °C und die Querstreckung vorzugsweise bei 120 bis 170 °C durchgeführt.

Bevorzugt wird/werden nach der biaxialen Streckung eine oder beide Oberfläche/n der Folie nach einer der bekannten Methoden corona- oder flammbehandelt. Die Behandlungsintensität liegt im allgemeinen im Bereich von 37 bis 50 mN/m, vorzugsweise 39 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung,

meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 400 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Folie zeichnet sich durch hervorragende mechanische Festigkeiten aus.

Der Elastizitätsmodul der Folie in Längsrichtung liegt bei größer 2 500 N/mm$^2$, vorzugsweise größer 2 700 N/mm$^2$, und der Elastizitätsmodul der Folie in Querrichtung liegt bei größer 4 000 N/mm$^2$, vorzugsweise größer 4 200 N/mm$^2$. Überraschenderweise wurde gefunden, daß zur Erzielung dieser ausgezeichneten Elastizitätsmodule im Vergleich zum Stand der Technik kein Harz zugesetzt werden muß. Nach dem Stand der Technik werden der Basisschicht etwa 15 bis 30 Gew.-% Harz zugegeben, um die guten mechanischen Eigenschaften zu erreichen. Die erfindungsgemäße Folie enthält kein Harz, so daß keine Harzablagerungen an der Schnecke des Extruders und an den Walzen der Längsstreckung auftreten. Außerdem zeichnet sich die Folie durch niedrige Warmblockwerte und durch ein ausgezeichnetes, blockfreies Verhalten bei der Weiterverarbeitung aus.

Überraschenderweise sind die erfindungsgemäßen Folien selbst mit einer Dicke von unter 20 µm noch ausreichend steif, um auf den modernen schnellaufenden Verpackungsmaschinen verarbeitet zu werden. Mit dieser Folie ist es daher möglich, den Kunststoffanteil von Verpackungen weiter zu senken, ohne daß Qualitätseinbußen der Verpackung auftreten.

Weiterhin zeichnen sich die Folien durch eine deutlich verbesserte Barriere vor allem gegenüber Wasserdampf und Sauerstoff aus. Überraschenderweise wurde auch hier gefunden, daß zur Erzielung dieser guten Barrierewerte der Folie kein Harz zugesetzt werden muß. Bei der eingangs im Stand der Technik beschriebenen 25 µm dicken Folie mit einer Wasserdampfdurchlässigkeit von 1,1 g/m$^2$·d kann beispielsweise ohne Zugabe von Kohlenwasserstoffharz die Wasserdampfbarriere auf 0.9 g/m$^2$·d herabgesetzt werden. Bei Folien nach dem Stand der Technik ist dafür die Zugabe von mindestens 5 bis 10 Gew.-% Harz notwendig.

Zur Charakterisierung der Rohstoffe und der Folien wurden die folgenden Meßmethoden benutzt:

Schmelzflußindex

Der Schmelzflußindex wurde nach DIN 53 735 bei 21,6 N Belastung und 230 °C gemessen.

Schmelzpunkt

DSC-Messung, Maximum der Schmelzkurve, Aufheizgeschwindigkeit 20 °C/min.

Wasserdampf- und Sauerstoffdurchlässigkeit

Die Wasserdampfdurchlässigkeit wird gemäß DIN 53 122 Teil 2 bestimmt. Die Bestimmung der Sauerstoffbarrierewirkung erfolgt gemäß Entwurf DIN 53 380 Teil 3 bei einer Luftfeuchte von 53 %.

Trübung

Die Trübung der Folie wurde nach ASTM-D 1003-52 gemessen.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Oberflächenspannung

Die Oberflächenspannung wurde mittels der sogenannten Tintenmethode (DIN 53 364) bestimmt.

Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

Reißfestigkeit, Reißdehnung

Die Reißfestigkeit und die Reißdehnung werden nach DIN 53455 bestimmt.

E-Modul

Der E-Modul wird gemäß DIN 53 457 bzw. ASTM 882 bestimmt.

Bestimmung des Warmblockverhaltens

Zur Messung des Warmblockverhaltens werden zwei einseitig filzbeklebte Holzklötzchen mit den Abmessungen 72 mm x 41 mm x 13 mm in die zu vermessende Folie eingeschlagen und gesiegelt. Auf die mit den Filzauflagen zueinandergekehrten Holzklötzchen wird ein Gewicht von 200 g plaziert und dieser Aufbau in einen auf 70 °C vortemperierten Wärmeofen gebracht und dort über 2 h belassen. Danach wird für 30 min auf Raumtemperatur (21 °C) abgekühlt, das Gewicht von den Holzklötzchen heruntergenommen und das obere Klötzchen mittels einer mechanischen Apparatur vom unteren Klötzchen heruntergezogen. Die Auswertung erfolgt über 4 Einzelmessungen, über die dann eine maximale Abschubkraft (gemessen in N) festgestellt wird. Die Spezifikation ist erfüllt, wenn keine der Einzelmessungen über 5 N liegt.

Molekulargewichtsbestimmung

Die mittlere Molmasse und die mittlere Molmassen-Dispersität wurden in Anlehnung an DIN 55 672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur (≈135°C) durchgeführt.

Isotaktischer Anteil

Sowohl der isotaktische Anteil des Homopolymeren als auch der isotaktische Anteil der Folie können in Näherung durch die unlösliche Fraktion des Rohstoffes bzw. der Folie in einem geeigneten Lösungsmittel charakterisiert werden. Es hat sich als zweckmäßig erwiesen n-Heptan zu verwenden. Üblicherweise führt man eine Soxlet-Extraktion mit siedendem n-Heptan durch. Zur Erzielung einer guten Reproduzierbarkeit ist es zweckmäßig, das Soxlet anstelle von Granulat mit einem Preßling zu befüllen. Die Dicke des Preßlings sollte hierbei 500 Mikrometer nicht übersteigen. Für die quantitative Erfassung des ataktischen Anteils des Homopolymeren ist es von entscheidender Bedeutung, eine ausreichende Extraktionszeit sicherzustellen. In der Regel liegt die Extraktionszeit im Bereich von 8 bis 24 Stunden.

Die operationelle Definition des isotaktischen Anteils $PP_{iso}$ in Prozent ist gegeben durch das Verhältnis der Gewichte der getrockneten n-heptanunlöslichen Fraktion zur Einwaage:

$$PP_{iso} = 100x \text{ (n-heptanunlösliche Fraktion/Einwaage)}$$

Eine Analyse des getrockneten n-Heptan-Extraktes zeigt, daß dieser in der Regel nicht aus reinem ataktischen Propylenhomopolymeren besteht. Bei der Extraktion werden auch aliphatische und olefinische Oligomere, insbesondere isotaktische Oligomere sowie auch mögliche Zusatzstoffe wie z. B. hydrierte Kohlenwasserstoffharze, miterfaßt.

Kettenisotaxie-Index

Der oben definierte isotaktische Anteil $PP_{iso}$ ist für die Charakterisierung der Kettenisotaxie des Homopolymeren nicht ausreichend. Es erweist sich als sinnvoll, den Kettenisotaxie-Index II des Homopolymeren mittels hochauflösender $^{13}C$-NMR-Spektroskopie zu bestimmen, wobei als NMR-Probe nicht der Originalrohstoff, sondern dessen n-heptanunlösliche Fraktion zu wählen ist. Zur Charakterisierung der Isotaxie von Polymerketten benutzt man in der Praxis meist den $^{13}C$-NMR-spektroskopischen Triaden-Isotaxie-Index II (Triaden).

Bestimmung des triadenbezogenen Kettenisotaxie-Index II (Triaden)

Die Bestimmung des Kettenisotaxie-Index II (Triaden) des n-heptanunlöslichen Anteils des Homopolymeren sowie der Folie wird aus dessen bzw. deren $^{13}C$-NMR-Spektrum bestimmt. Man vergleicht die Intensitäten von Triaden-Signalen, welche aus den Methylgruppen mit unterschiedlichen lokalen Umgebungen resultieren.

Hinsichtlich der Auswertung des $^{13}C$-NMR-Spektrums sind zwei Fälle zu unterscheiden:

A) Der untersuchte Rohstoff ist ein Propylenhomopolymer ohne statistischen $C_2$-Gehalt.

B) Der untersuchte Rohstoff ist ein Propylenhomopolymer mit einem geringen statistischen $C_2$-Gehalt, im folgenden $C_2$-$C_3$-Copolymer genannt.

**Fall A:**

Der Kettenisotaxie-Index des Homopolymeren wird aus dessen $^{13}C$-NMR-Spektrum bestimmt. Man vergleicht die Intensitäten von Signalen, welche aus den Methylgruppen mit unterschiedlicher Umgebung resultieren. Im $^{13}C$-NMR-Spektrum eines Homopolymeren treten im wesentlichen drei Gruppen von Signalen, sogenannte Triaden, auf.

1. Bei einer chemischen Verschiebung von etwa 21 bis 22 ppm tritt die "mm-Triade" auf, welche den Methylgruppen mit links und rechts unmittelbar benachbarten Methylgruppen zugeordnet wird.

2. Bei einer chemischen Verschiebung von etwa 20,2 bis 21 ppm tritt die "mr-Triade" auf, welche den Methylgruppen mit links oder rechts unmittelbar benachbarten Methylgruppen zugeordnet wird.

3. Bei einer chemischen Verschiebung von etwa 19,3 bis 20 ppm tritt die "rr-Triade" auf, welche den Methylgruppen ohne unmittelbar benachbarte Methylgruppen zugeordnet wird.

Die Intensitäten der zugeordneten Signalgruppen werden als Integral der Signale bestimmt. Der Kettenisotaxie-Index ist wie folgt definiert:

$$II\ (Triaden) = \frac{J_{mm} + 0{,}5\ J_{mr}}{J_{mm} + J_{mr} + J_{rr}} \cdot 100$$

worin $J_{mm}$, $J_{mr}$ und $J_{rr}$ die Integrale der zugeordneten Signalgruppen bedeuten.

**Fall B:**

Abb. 1 ist eine schematisch vergrößerte Darstellung eines $^{13}C$-NMR Spektrums von einem Ethylen-Propylen-Copolmeren. Die chemische Verschiebung der interessierenden Methylgruppen liegt im Bereich 19 bis 22 ppm. Wie in Abb. 1 ersichtlich kann das Spektrum der Methylgruppen in drei Blöcke unterteilt werden. In diesen Blöcken erscheinen die $CH_3$-Gruppen in triadischen Sequenzen, deren Zuordnung zu den lokalen Umgebungen im folgenden näher erläutert wird:

**Block 1:**

$CH_3$-Gruppen in der PPP-Sequenz (mm-Triade)

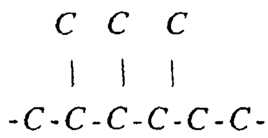

**Block 2:**

$CH_3$-Gruppen in-der PPP-Sequenz (mr oder rm-Triaden)

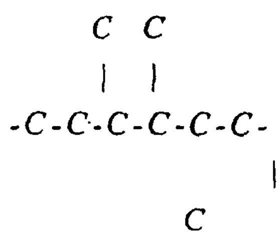

und $CH_3$-Gruppen in der EPP-Sequenz (m-Kette):

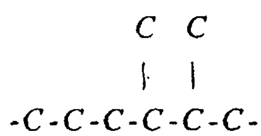

**Block 3**

$CH_3$-Gruppen in der PPP-Sequenz (rr-Triaden):

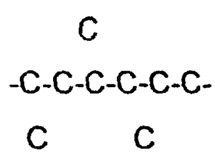

$CH_3$-Gruppen in einer EPP-Sequenz (r-Kette):

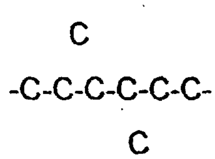

$CH_3$-Gruppen in einer EPE-Sequenz:

C
-C-C-C-C-C-C-

Bei der Bestimmung des triadenbezogenen Kettenisotaxie-Index II (Triaden) des n-heptanunlöslichen Anteils eines Ethylen-Propylen-Copolymers werden nur PPPTriaden in Betracht gezogen, d. h. nur solche Propylen-Einheiten, die zwischen zwei benachbarten Propylen-Einheiten liegen (siehe auch EP-B-0 115 940, Seite 3, Zeilen 48 und 49).
Die Definition des Triaden-Isotaxie-Index eines Ethylen-Propylen-Copolymeren lautet:

$$\text{II (Triaden)} = 100x(J_{mm}/J_{ppp})$$

Berechnung des Kettenisotaxie-Index eines Ethylen-Propylen-Copolymers:

1. $J_{mm}$ ist gegeben durch das Peakintegral von Block 1.

2. Berechne das Integral ($J_{gesamt}$) aller Methylgruppenpeaks in den Blöcken 1, 2 und 3.

3. Durch einfache Betrachtungen läßt sich zeigen, daß $J_{ppp}=J_{gesamt}-J_{EPP}-J_{EPE}$.

Probenvorbereitung und Messung:

60 bis 100 mg Polypropylen werden in 10 mm-NMR-Röhrchen eingewogen und Hexachlorbutadien und Tetrachlorethan in einem Mischungsverhältnis von etwa 1,5:1 zugegeben, bis eine Füllhöhe von ca. 45 mm erreicht ist. Die Suspension wird so lange (in der Regel ca. eine Stunde) bei ca. 140 °C aufbewahrt, bis eine homogene Lösung entstanden ist. Um den Lösevorgang zu beschleunigen, wird die Probe von Zeit zu Zeit mit einem Glasstab gerührt.
Die Aufnahme des $^{13}C$-NMR-Spektrums erfolgt bei erhöhter Temperatur (in der Regel 365 K) unter Standardmeßbedingungen (halbquantitativ).

**Referenzen:**

W.O. Crain, Jr., A. Zambelli, and J.D. Roberts, Macromolecules, 4,330 (1971)
A. Zambelli, G. Gatti, C. Sacchi, W.O. Crain, Jr., and J.D. Roberts, Macromolecules, 4,475 (1971)
C.J. Carman and C.E. Wilkes, Rubber Chem. Technol. 44,781 (1971)

**Beispiel 1**

Es wurde durch Coextrusion und anschließende stufenweise Orientierung in Längs- und Querrichtung eine transparente dreischichtige Folie mit symmetrischem Aufbau mit einer Gesamtdicke von 16 µm hergestellt. Die Deckschichten hatten eine Dicke von jeweils 0,6 µm.

A-Basisschicht:

| | |
|---|---|
| 99,85 Gew.-% | hochisotaktisches Polypropylen der Firma Solvay mit dem Markennamen ®Eltex P HCL 480 |
| 0,15 Gew.-%N,N-bis-ethoxyalkylamin | |

Der n-heptanunlösliche Anteil der Folie hatte einen mittels $^{13}C$-NMR-Spektroskopie gemessenen Kettenisotaxie-Index von 96 %.

B-Deckschichten:

| | |
|---|---|
| 98,77 Gew.-% | statistisches Ethylen-Propylen-Copolymeres mit einem $C_2$-Gehalt von 4,5 Gew.-% |
| 0,33 Gew.-% | $SiO_2$ als Antiblockmittel mit einer mittleren Teilchengröße von 2 µm |
| 0,90 Gew.-% | Polydimethylsiloxan mit einer Viskosität von 30 000 $mm^2/s$ |

Die Herstellungsbedingungen in den einzelnen Verfahrensschritten waren:

| | | | |
|---|---|---|---|
| Extrusion | Temperaturen | A-Schicht | 280 °C |
| | | B-Schichten | 280 °C |
| | Temperatur der Abzugswalze: | | 30 °C |
| Längsstreckung | Temperatur | | 135 °C |
| | Längsstreckverhältnis: | | 6,5 |
| Querstreckung | Temperatur: | | 160 °C |
| | Querstreckverhältnis: | | 8,5 |
| Fixierung | Temperatur: | | 110°C |
| | Konvergenz: | | 20 % |

Bei dem Querstreckverhältnis $\lambda_Q$ = 8,5 handelt es sich um einen Effektivwert. Dieser Effektivwert berechnet sich aus der Endfolienbreite B, reduziert um die zweifache Säumstreifenbreite b, dividiert durch die Breite der längsgestreckten Folie C, ebenfalls um die zweifache Säumstreifenbreite b reduziert.

| | | |
|---|---|---|
| Zahlenangaben | Endfolienbreite | B = 4 000 mm |
| | Endfoliendicke | d = 16 µm |
| | Säumstreifenbreite | b = 40 mm |
| | Breite der längsgestreckten Folie | C = 530 mm |

Die auf diese Weise hergestellte Folie hatte die in der Tabelle aufgelisteten Eigenschaften (erste Zeile: Beispiel 1).

**Beispiel 2**

Wie in Beispiel 1 wurde eine dreischichtige Folie mit einer Gesamtdicke von 16 µm und mit Deckschichtdicken von jeweils 0,5 µm hergestellt. Die Rohstoffzusammensetzung für die Basisschicht und für die Deckschichten ist ebenfalls die gleiche wie in Beispiel 1. Geändert wurden lediglich die Bedingungen in der Längs- und Querstreckung:

| | | |
|---|---|---|
| Längsstreckung | Temperatur | 135 °C |
| | Längsstreckverhältnis | 7,5 |
| Querstreckung | Temperatur | 160 °C |
| | Querstreckverhältnis | 8,0 |

Die Folieneigenschaften sind in der Tabelle - zweite Zeile (Beispiel 2) - aufgelistet.

**Beispiel 3**

Die Rezeptur für die Basisschicht wurde wie in Beispiel 1 gewählt. Bei den Deckschichten wurde der Siloxangehalt von 0,9 Gew.-% auf 1,6 Gew.-% erhöht. Damit wurde das Schlupfvermögen der Folie stark verbessert. Die Verfahrensbedingungen waren diejenigen aus Beispiel 2.

**Beispiel 4**

Für die Basisschicht wurde die Rezeptur von Beispiel 2 übernommen. Zusätzlich enthielt die Basisschicht noch Erucasäureamid als Gleitmittel in der Konzentration von 0,2 Gew.-%, bezogen auf die Basisschicht. Die Deckschichten enthielten ebenfalls das hochisotaktische Polypropylen der Firma Solvay. Als Antiblockmittel wurde in den Deckschichten das Siliciumdioxid aus Beispiel 1 in der gleichen Konzentration verwendet. Die Verfahrensparameter wurden Beispiel 2 entnommen.

**Beispiel 5**

Die Dicke der Basisschicht wurde beibehalten. Die Deckschichtdicken betrugen jeweils 1 µm. Die Basisschicht entsprach der aus Beispiel 1. Die Deckschichten waren wie in Beispiel 1 symmetrisch angeordnet und hatten folgende Rezeptur:

| | |
|---|---|
| 68,77 Gew.-% | statistisches Ethylen-Propylen-Copolymeres mit einem $C_2$-Gehalt von 4,6 Gew.-% |
| 30,0 Gew.-% | Hochdruckpolyethylen mit einem Schmelzflußindex von 2 g/10 min der Firma Hoechst mit dem Markennamen ®HOSTALEN GD 7255 |
| 0,33 Gew.-% | $SiO_2$ als Antiblockmittel mit einer mittleren Teilchengröße von 2 µm |
| 0,90 Gew.-% | Polydimethylsiloxan mit einer Viskosität von 30 000 $mm^2/s$ |

Die Herstellungsbedingungen in den einzelnen Verfahrensschritten waren wie in Beispiel 1 angegeben.
Im Vergleich zu den bisherigen Beispielen hatte die Folie ein mattes Aussehen.

**Beispiel 6**

Die Rezeptur der Folie war wie im Beispiel 1. Die Streckbedingungen wurden Beispiel 1 entnommen. Die Foliendicke betrug jetzt 20 µm anstelle von 16 µm.

**Vergleichsbeispiel 1**

In Bezug auf die Dickenverhältnisse, den Folienaufbau und die Verfahrensbedingungen wurde kein Unterschied zu Beispiel 1 gemacht: Anstelle des in der Basisschicht eingesetzten Materials der Firma Solvay (®Eltex P HCL 480) wurde jetzt das nach dem Stand der Technik bekannte Material der Firma Solvay ®Eltex PHP 405 gewählt. Der n-heptanunlösliche Anteil der Folie hatte einen mittels $^{13}C$-NMR-Spektroskopie gemessenen Kettenisotaxie-Index von 92 %. Die resultierenden Folieneigenschaften sind in der Tabelle aufgelistet.

**Vergleichsbeispiel 2**

Es wurde das in der EP-A-0 046 833 aufgeführte Beispiel 1 nachgearbeitet. Der n-heptanlösliche Anteil der Folie hatte einen mittels $^{13}C$-NMR-Spektroskopie gemessenen Kettenisotaxie-Index von 93 %. Der Harzanteil in der Basisschicht betrug 10 Gew.-%. Im Vergleich zur erfindungsgemäßen Folie (vgl. Beispiel 6) sind die Barrierewerte für Wasserdampf und der Zug-Elastizitätsmodul deutlich niedriger.

## TABELLE

| | Foliendicke µm | E-Modul DIN 53 457 längs/quer $N/mm^2$ | Reißfestigkeit DIN 53 455 längs/quer $N/mm^2$ | Reißdehnung DIN 53 455 längs/quer % | Glanz DIN 67 530 | Wasserdampfdurchlässigkeit DIN 53 122 $g/m^2 \cdot d$ | Trübung ASTM D 1003-52 % | Reibung 14 Tage nach Produktion A-Seite/D-Seite | Kratzfestigkeit ΔTrübung | Warmblockverhalten N |
|---|---|---|---|---|---|---|---|---|---|---|
| B1 | 16 | 2 800/4 100 | 200/230 | 140/70 | 100 | 1,4 | 2,0 | 0,23/0,25 | 25 | 1,5 |
| B2 | 16 | 3 000/4 250 | 200/250 | 120/70 | 100 | 1,4 | 2,0 | 0,25/0,25 | 25 | 1,0 |
| B3 | 16 | 3 100/4 300 | 200/270 | 120/70 | 100 | 1,4 | 2,0 | 0,20/0,20 | 25 | 1,5 |
| B4 | 16 | 3 300/4 400 | 220/280 | 110/70 | 105 | 1,4 | 1,0 | 0,24/0,25 | 10 | - |
| B5 | 16 | 2 700/4 050 | 190/240 | 140/70 | 20 | 1,45 | 40 | 0,20/0,20 | 35 | 0,5 |
| B6 | 16 | 2 800/4 100 | 200/240 | 140/70 | 105 | 1,1 | 2,0 | 0,25/0,27 | 25 | 1,3 |
| VB1 | 16 | 2 300/4 100 | 150/320 | 160/70 | 100 | 1,8 | 2,0 | 0,23/0,25 | 25 | 3,0 |
| VB2 | 20 | 2 200/4 200 | 140/320 | 155/65 | 100 | 0,88 | 2,0 | 0,24/0,27 | 27 | 7,0 |

B = Beispiel, VB = Vergleichsbeispiel

## Patentansprüche

1. Biaxial orientierte Polypropylenfolie, **dadurch gekennzeichnet, daß** der n-heptanunlösliche Anteil der Folie einen Kettenisotaxie-Index, gemessen mittels $^{13}$C-NMR-Spektroskopie, von mindestens 95 % aufweist, daß die Basisschicht im wesentlichen kein Harz enthält und daß der Elastizitätsmodul der Folie in Längsrichtung größer 2 500 N/mm$^2$ und der Elastizitätsmodul der Folie in Querrichtung größer 4 000 N/mm$^2$ ist und daß die Folie einschichtig ist und die Folie eine Dicke von < 20 µm aufweist.

2. Polypropylenfolie gemäß Anspruch 1, **dadurch gekennzeichnet, daß** die Basisschicht ein Polypropylen enthält, dessen n-heptanunlöslicher Anteil einen Kettenisotaxie-Index, gemessen mittels $^{13}$CNMR-Spektroskopie, von mindestens 95 %, vorzugsweise 95,5 bis 98 %, aufweist.

3. Polypropylenfolie gemäß Anspruch 1 und/oder 2, **dadurch gekennzeichnet, daß** die Basisschicht ein Polypropylen enthält, dessen $M_w/M_n$ größer 6, vorzugsweise 7 bis 15, ist.

4. Polypropylenfolie gemäß einem oder mehreren der Ansprüche 1 bis 3, **dadurch gekennzeichnet, daß** das Propylenpolymer der Basisschicht peroxidisch abgebaut ist und das $M_w/M_n$ kleiner 6, vorzugsweise 2 bis 6, ist.

5. Verfahren zur Herstellung einer Polypropylenfolie gemäß Anspruch 1, **dadurch gekennzeichnet, daß** die Orientierung in Längsrichtung mit einem Längsstreckverhältnis von 5:1 bis 9:1 und in Querrichtung mit einem Querstreckverhältnis von 5:1 bis 9:1 - erfolgt.

## Claims

1. Biaxially oriented polypropylene film, **characterized in that** the n-heptane-insoluble content of the film has a chain isotacticity index, measured by means of $^{13}$C-NMR spectroscopy, of at least 95%, **in that** the base layer essentially comprises no resin, and **in that** the modulus of elasticity of the film in the longitudinal direction is greater than 2 500 N/mm$^2$ and the modulus of elasticity of the film in the transverse direction is greater than 4 000 N/mm$^2$, and **in that** the film is single-layered and the film has a thickness of < 20 µm.

2. Polypropylene film according to Claim 1, **characterized in that** the base layer comprises a polypropylene whose n-heptane-insoluble content has a chain isotacticity index, measured by means of $^{13}$C-NMR spectroscopy, of at least 95%, preferably from 95.5 to 98%.

3. Polypropylene film according to Claim 1 and/or 2, **characterized in that** the base layer comprises a polypropylene whose $M_w/M_n$ is greater than 6, preferably from 7 to 15.

4. Polypropylene film according to one or more of Claims 1 to 3, **characterized in that** the propylene polymer of the base layer has been peroxidically degraded and the $M_w/M_n$ is less than 6, preferably from 2 to 6.

5. Process for the production of a polypropylene film according to Claim 1, **characterized in that** the orientation in the longitudinal direction is carried out with a longitudinal stretching ratio of from 5:1 to 9:1 and the orientation in the transverse direction is carried out with a transverse stretching ratio of from 5:1 to 9:1.

## Revendications

1. Film de polypropylène biaxialement orienté, **caractérisé en ce que** la part non soluble à l'heptane-n du film présente un indice isotactique de chaîne mesuré par spectroscopie R.M.N.$^{13}$C d'au moins 95%, que la couche de base ne contient pour l'essentiel pas de résine et le module d'élasticité du film dans le sens longitudinal est plus grand que 2500 N/mm$^2$ et que le module d'élasticité du film dans le sens transversal est plus grand que 4000 N/mm$^2$ et que le film est en une seule couche et que le film présente une épaisseur de < 20 µm.

2. Film de polypropylène selon la revendication 1, **caractérisé en ce que** la couche de base contient un polypropylène dont la part non soluble à l'heptane-n présente un indice isotactique de chaîne mesuré par spectroscopie R.M.N.$^{13}$C d'au moins 95 %, de préférence de 95,5 à 98 %.

**3.** Film de polypropylène selon la revendication 1 et/ou 2, **caractérisé en ce que** la couche de base contient un polypropylène dont le rapport $M_w/M_n$ est plus grand que 6, de préférence plus grand que 7.

**4.** Film de polypropylène selon l'une ou l'autre des revendications 1 à 3, **caractérisé en ce que** le polymère propylène de la couche de base est décomposée aux peroxydes et le rapport $M_w/M_n$ est plus petit que 6, de préférence de 2 à 6.

**5.** Procédé pour la fabrication d'un film de polypropylène selon la revendication 1, **caractérisé en ce que** l'orientation dans le sens longitudinal s'effectue dans un rapport d'étirage longitudinal de 5 à 1 jusqu'à 9 à 1 et dans le sens transversal dans un rapport d'étirage transversal de 5 à 1 jusqu'à 9 à 1.